# EUROPEAN PATENT SPECIFICATION

(11) **EP 3 556 512 B1**
(45) Date of publication and mention of the grant of the patent: **17.02.2021**
(21) Application number: 19167037.1
(22) Date of filing: 03.04.2019
(51) Int. Cl.: B24B 55/05, B23Q 11/06, B27G 19/04, B23D 45/16, B23D 59/00

(54) **CUT-OFF MACHINE**
TRENNMASCHINE
MACHINE DE TRONÇONNAGE

(30) Priority: 18.04.2018 JP 2018079620
(43) Date of publication of application: 23.10.2019
(73) Proprietor: Yamabiko Corporation, Ohme-shi Tokyo 198-8760 (JP)
(72) Inventor: NOMURA, Fumio, Yamagata-gun, Hiroshima 731-1597 (JP); MIYAMOTO, Tadafumi, Yamagata-gun, Hiroshima 731-1597 (JP)
(74) Representative: Delorme, Nicolas

(56) References cited:
- JP-A- H0 679 520
- JP-U- H0 326 429
- US-A- 3 805 639
- US-A- 4 774 866
- US-A1- 2009 007 435

## Description

### BACKGROUND

The present disclosure relates to a cut-off machine according to the preamble of claim 1. Such a cut-off machine is disclosed in US 4 774 866 A.

Conventionally, there has been known a cut-off machine which includes a circular blade and is configured to cut a cutting target (for example, a concrete body) by rotationally driving the circular blade. For example, Japanese Examined Patent Publication No. H07-14570 discloses a cutting tool which includes a circular cutting blade and a safety cover which covers the circular cutting blade with only a portion of a cutting edge of the circular cutting blade exposed. In this cutting tool, the safety cover is divided into a safety cover body and a movable body, and a spring is interposed between the safety cover body and the movable body.

### SUMMARY

In the cut-off machine as in Japanese Examined Patent Publication No. H07-14570, the circular blade (circular cutting blade) is clamped between a pair of holding members each having an annular shape and is held by a rotary shaft, and the rotary shaft is rotatably supported on a fixed guard (the safety cover body) which covers part of an outer periphery of the blade. In addition, a movable guard (the movable body) is coupled to the fixed guard such that the movable guard which movably covers part of the outer periphery of the blade can be turned around the rotary shaft.

In the cut-off machine as described above, if an external force acts on the movable guard to deform the movable guard in an axial direction, it becomes difficult to smoothly turn the movable guard. In order to reduce or prevent this deformation of the movable guard, it is conceivable to radially outwardly expanding a portion located adjacent to the rotary shaft and serving as a receiving surface for the movable guard (i.e., a portion receiving the movable guard in the radial direction) so as to increase a length of the portion serving as the receiving surface for the movable guard (i.e., a length in a radial direction of the portion serving as the receiving surface for the movable guard). However, when the portion serving as the receiving surface for the movable guard (in particular, a portion which faces a cutting target when the blade cuts the cutting target) is radially outwardly expanded beyond the outer peripheral edges of the pair of holding members, a maximum cutting depth of the blade becomes shallow.

As can be seen, in the above-described cut-off machine, it is difficult to increase the length of the receiving surface for the movable guard while reducing a decrease in the maximum cutting depth of the blade.

The present invention provides a cut-off machine according to claim 1. This cut-off machine includes: a rotary shaft; a blade having a circular shape, and having, in a central portion thereof, an insertion hole in which the rotary shaft is inserted; a holding mechanism configured to hold the blade with respect to the rotary shaft, and including a pair of holding members which each has an annular shape and which clamp the blade therebetween; a fixed guard configured to cover a portion of an outer periphery of the blade, and including a fixed support which is provided with a bearing portion rotatably supporting the rotary shaft; a movable guard configured to movably cover a portion of the outer periphery of the blade, the portion being circumferentially adjacent to the portion covered with the fixed guard, the movable guard having a movable base formed to surround a periphery of the rotary shaft; and a coupling mechanism configured to couple the movable guard to the fixed guard such that the movable guard can be turned around the rotary shaft, and including a first coupling member, a second coupling member, and a coupling bolt, the first coupling member being disposed between the fixed support and the movable base, the second coupling member being disposed between the movable base and the pair of holding members, the first coupling member and the second coupling member slidably clamping the movable base therebetween, the coupling bolt fixing the first coupling member to the fixed support. An inner peripheral edge of the movable base is located closer to the rotary shaft than the coupling bolt is.

According to the present invention, the movable base is formed such that the inner peripheral edge of the movable base is located closer to the rotary shaft than the coupling bolt is. This configuration makes it possible to expand, radially inwardly (i.e., toward the shaft center of the rotary shaft), the portion serving as the receiving surface for the movable guard to a greater extent than in a case where the inner peripheral edge of a movable guard is located remoter from the rotary shaft than the coupling bolt is. Thus, a length of the receiving surface for the movable guard (a length in the radial direction of the portion serving as the receiving surface for the movable guard) can be increased so as not to expand the portion serving as the receiving surface for the movable guard (in particular, a portion which faces a cutting target when the blade cuts the cutting target) outward in the radial direction (or so as to reduce the outward expansion in the radial direction). This feature makes it possible to increase the length of the receiving surface for the movable guard while reducing a decrease in a maximum cutting depth of the blade.

### BRIEF DESCRIPTION OF THE DRAWINGS

FIG. 1 is a side view exemplifying an external appearance of a cut-off machine according to a first embodiment;
FIG. 2 is a perspective view exemplifying the external appearance of the cut-off machine according to the first embodiment;
FIG. 3 is a perspective view exemplifying the external appearance of the cut-off machine according to the first embodiment;
FIG. 4 is a side view exemplifying a configuration of the cut-off machine according to the first embodiment;
FIG. 5 is a side view exemplifying a configuration of a main part of the cut-off machine according to the first embodiment;
FIG. 6 is a cross-sectional view exemplifying the configuration of the cut-off machine according to the first embodiment;
FIG. 7 is an exploded perspective view exemplifying the configuration of the main part of the cut-off machine according to the first embodiment;
FIG. 8 is an exploded perspective view exemplifying the configuration of the main part of the cut-off machine according to the first embodiment;
FIG. 9 is a side view exemplifying the configuration of the main part of the cut-off machine according to the first embodiment;
FIG. 10 is a side view exemplifying an operation of the cut-off machine according to the first embodiment;
FIG. 11 is a cross-sectional view illustrating a configuration of a cut-off machine of a comparative example;
FIG. 12 is a cross-sectional view for illustrating a length of a receiving surface for a movable guard of the first embodiment; and
FIG. 13 is a cross-sectional view exemplifying a configuration of a cut-off machine according to a second embodiment, which is not according to the invention.

### DETAILED DESCRIPTION

Embodiments will be described below in detail with reference to the accompanying drawings. In the drawings, like reference characters are used to denote identical or equivalent components, and description thereof will not be repeated herein.

### (First Embodiment)

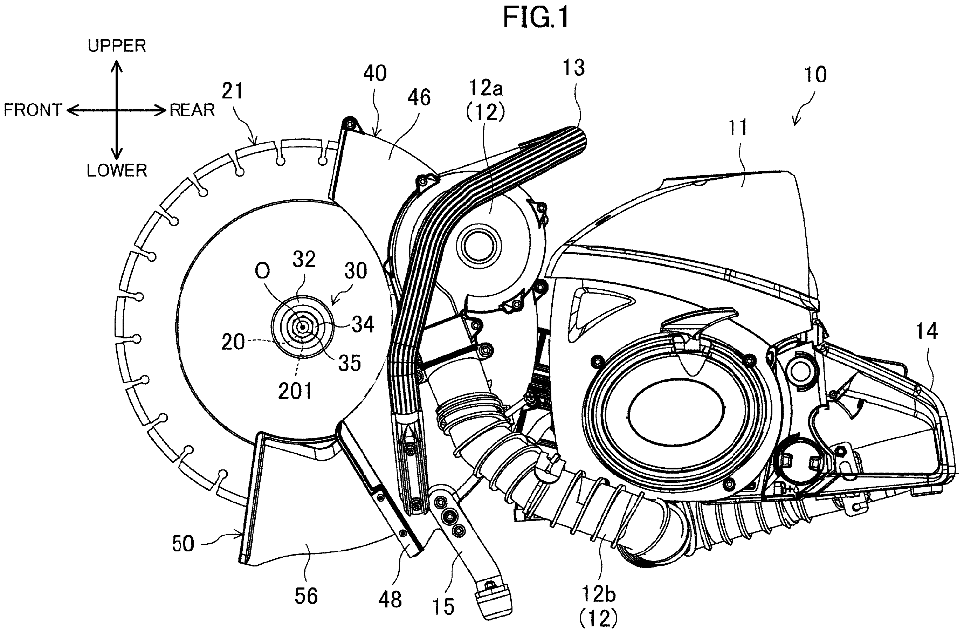

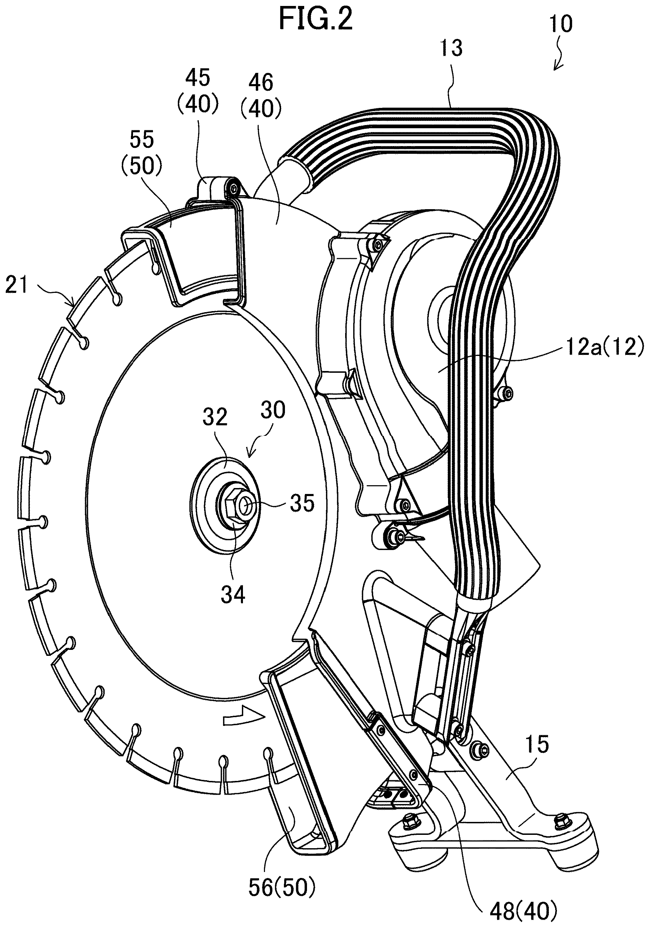

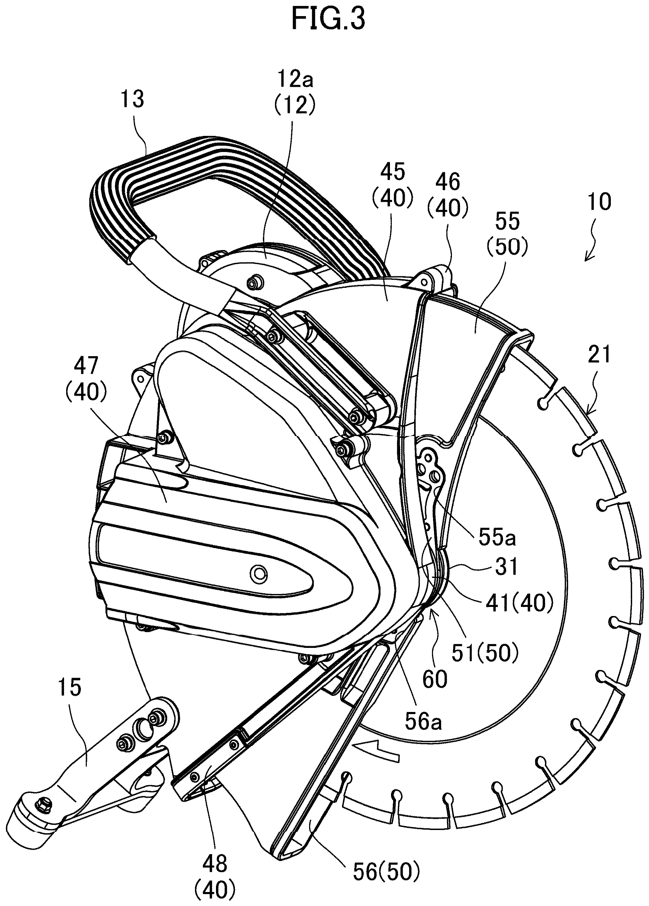

Each of FIGS. 1 to 3 exemplifies an external appearance of a cut-off machine 10 according to a first embodiment. The cut-off machine 10 includes a circular blade which can be rotationally driven by a drive source such as an engine, and is configured to cut a cutting target (for example, a concrete body) with the circular blade that is being rotationally driven. In this example, the cut-off machine 10 is embodied as a handheld cut-off machine (the so-called engine cut-off machine), and configured such that a worker operates the cut-off machine 10 while holding the cut-off machine 10 with both hands. Specifically, the cut-off machine 10 includes a rotary shaft 20, a blade 21, a holding mechanism 30, a fixed guard 40, a movable guard 50, a coupling mechanism 60, a housing 11, a dust collecting mechanism 12, a first handle 13, a second handle 14, and a leg 15.

Note that in the following description, for the sake of convenience of the description, a posture in which the cut-off machine 10 is placed on the ground (a horizontal surface) is defined as the reference posture of the cut-off machine 10, and directions relating to the cut-off machine 10 are defined based on a case where the cut-off machine 10 placed on the ground is viewed from the blade 21. In other words, directions (upper, lower, right, left, front, and rear directions) as used in the following description represents directions in a state where the cut-off machine 10 placed on the ground is viewed from the blade 21. For example, in FIG. 1, the right-to-left direction on a plane of paper corresponds to the front-to-rear direction, a side on the plane of paper facing the viewer corresponds to the right side, and a side on the plane of paper facing away from the viewer corresponds to the left side.

### [Rotary Shaft]

The rotary shaft 20 is configured to be rotationally driven by power of the later-described drive source (not shown). The rotary shaft 20 is rotatably supported on the fixed guard 40. In this example, the rotary shaft 20 is supported such that a shaft center O extends in the right-to-left direction.

### [Blade]

The blade 21 has a circular shape. The blade 21 has, in a central portion thereof, an insertion hole 201 into which the rotary shaft 20 is inserted. In this example, the blade 21 is comprised of a diamond blade.

Note that in the following description, for the sake of convenience of the description, a counterclockwise direction in FIG. 1 is denoted as a normal rotation direction of the blade 21 (for example, a direction in which the blade 21 rotates to cut a cutting target), and a direction reverse to the normal rotation direction (a clockwise direction in FIG. 1) is denoted as a reverse rotation direction.

### [Holding Mechanism]

The holding mechanism 30 is configured to hold the blade 21 with respect to the rotary shaft 20. In this example, the holding mechanism 30 holds the blade 21 with respect to the rotary shaft 20 in a detachable manner. With this configuration, when the rotary shaft 20 is rotationally driven, the blade 21 held with respect to the rotary shaft 20 via the holding mechanism 30 is rotationally driven together with the rotary shaft 20. Note that a configuration of the holding mechanism 30 will be described later in detail.

### [Fixed Guard, Movable Guard, and Coupling Mechanism]

The fixed guard 40 is configured to cover a portion of an outer periphery of the blade 21. The movable guard 50 is configured to movably cover another portion, of the outer periphery of the blade 21, which is circumferentially adjacent to the portion covered with the fixed guard 40. The coupling mechanism 60 is configured to couple the movable guard 50 to the fixed guard 40 such that the movable guard 50 can be turned around the rotary shaft 20. In this example, the fixed guard 40 covers a rear side of the blade 21, and the movable guard 50 covers an upper portion and a lower portion of the blade 21, whereas a front portion of the blade 21 is exposed. Note that configurations of the fixed guard 40, the movable guard 50, and the coupling mechanism 60 will be described later in detail.

### [Housing]

The housing 11 houses the drive source (not shown) such as the engine. The housing 11 and the fixed guard 40 are coupled to each other. At the coupling portion between the housing 11 and the fixed guard 40, a power transmission mechanism (for example, a combination of gears, pulleys, belts, and the like; not shown) is provided which transmits the power of the drive source to the rotary shaft 20 and the dust collecting mechanism 12. With this configuration, when the drive source housed in the housing 11 is actuated, the power of the drive source is transmitted via the power transmission mechanism to the rotary shaft 20 and the dust collecting mechanism 12, and thus, the rotary shaft 20 is rotationally driven and the dust collecting mechanism 12 operates.

### [Dust Collecting Mechanism]

The dust collecting mechanism 12 is configured to collect and accumulate dust particles generated in cutting a cutting target (for example, a concrete body or the like). Specifically, the dust collecting mechanism 12 includes a dust collecting fan 12a and a dust collecting hose 12b. A suction inlet of the dust collecting fan 12a communicates with an inside of the fixed guard 40, and a blowout outlet of the dust collecting fan 12a communicates with one end of the dust collecting hose 12b. The dust collecting fan 12a is configured to be driven by the power of the drive source (not shown) housed in the housing 11 so as to suck air from the inside of the fixed guard 40 through the suction inlet and blow out the sucked air to the dust collecting hose 12b through the blowout outlet. One end of the dust collecting hose 12b is connected to the blowout outlet of the dust collecting fan 12a, and the other end of the dust collecting hose 12b is connected to a dust collecting bag (that is, a bag for collecting and accumulating the dust particles; not shown). With this configuration, the dust particles generated in cutting the cutting target sequentially passes through the fixed guard 40, the dust collecting fan 12a, and the dust collecting hose 12b so as to be collected and accumulated in the dust collecting bag.

### [Handles and Leg]

The first handle 13 extends from an upper left portion of the fixed guard 40, passes above a rear portion of the fixed handle 40, and reaches a lower right portion of the fixed guard 40. The second handle 14 is provided on a rear portion of the housing 11. The leg 15 is provided on a lower portion of the fixed guard 40.

### [Configurations of Respective Components of Cut-off machine]

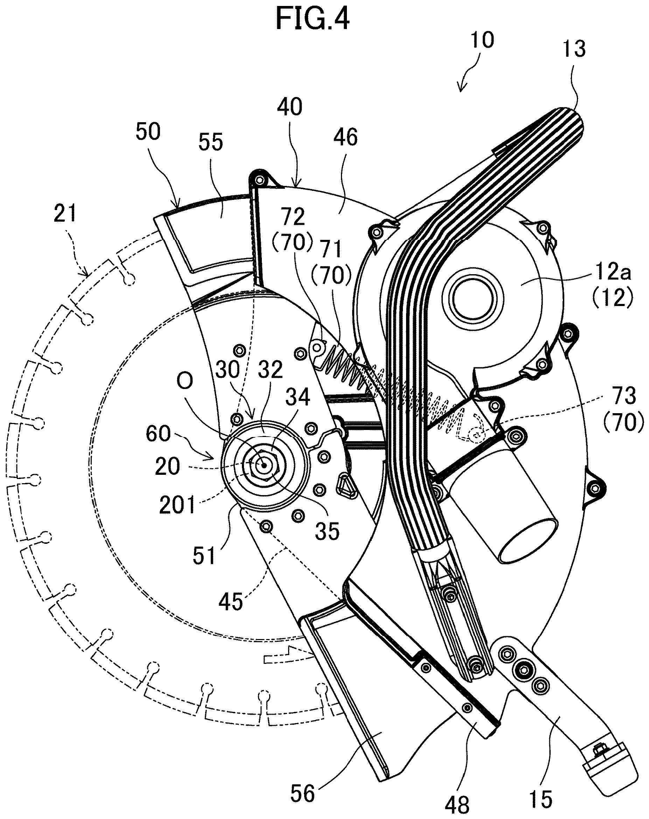

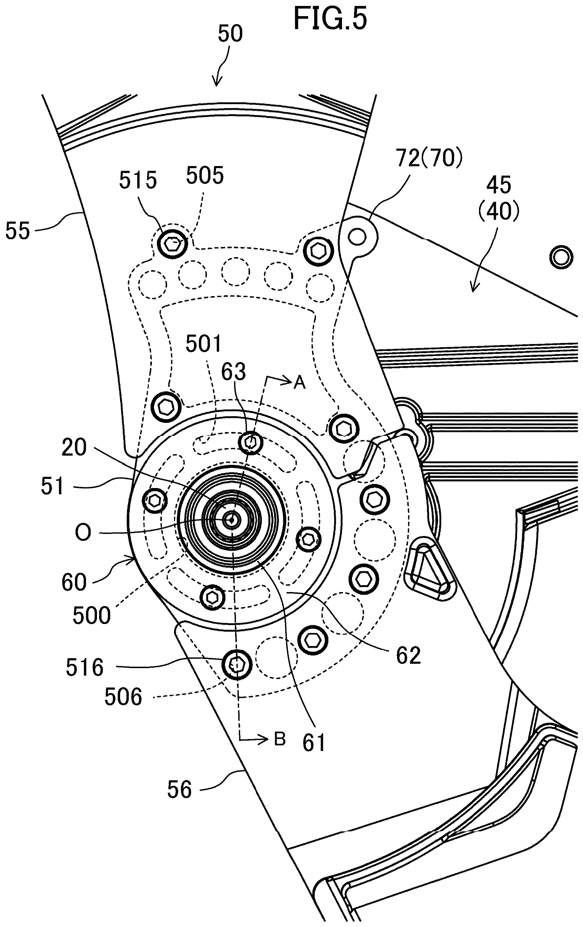

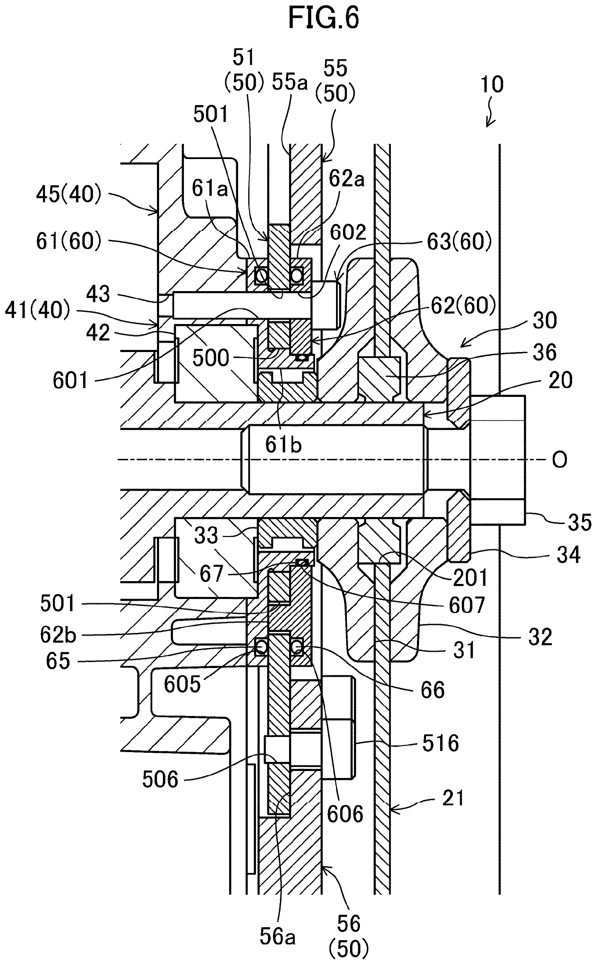

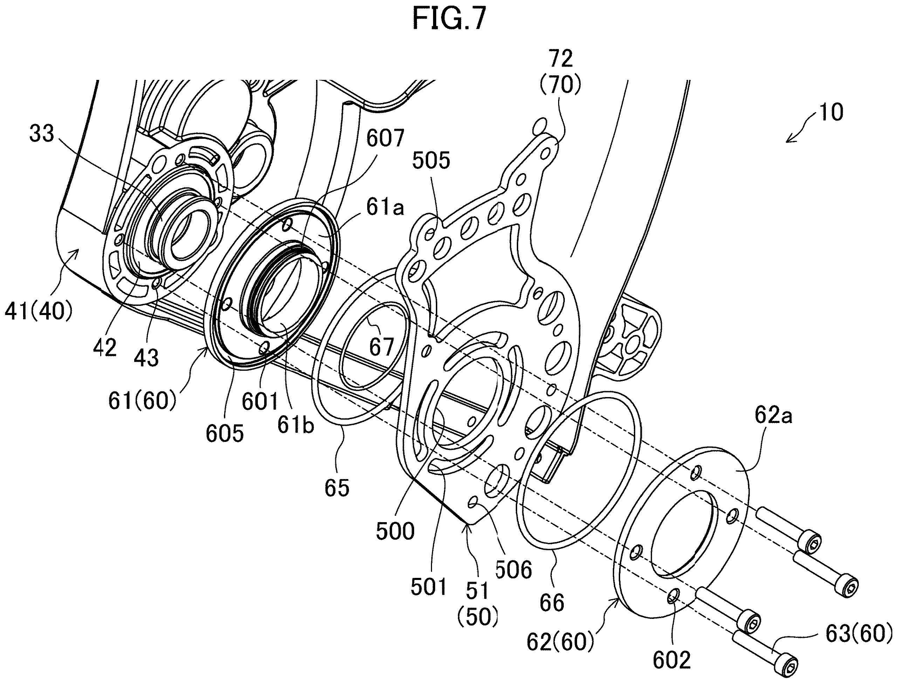

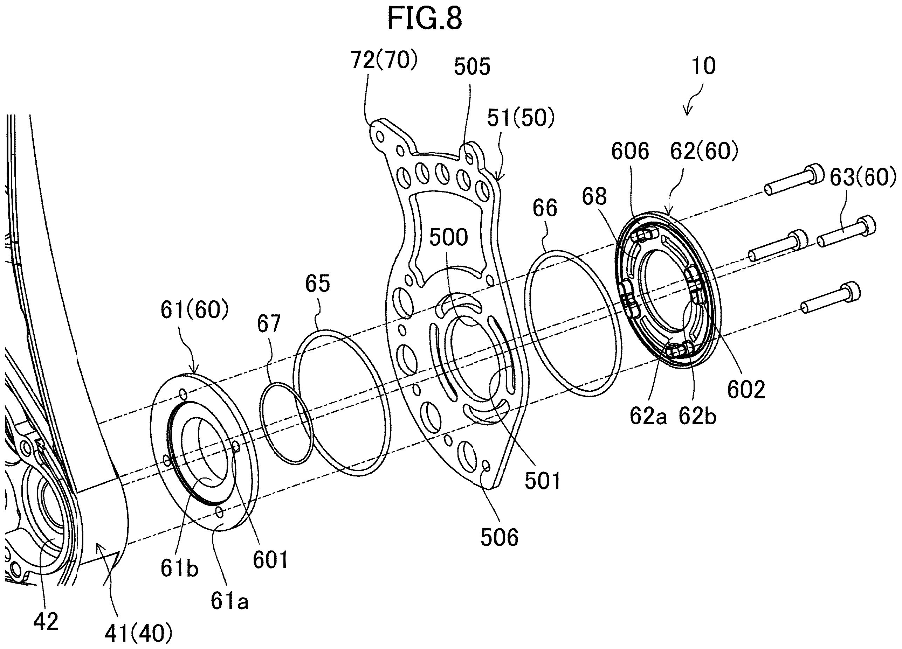

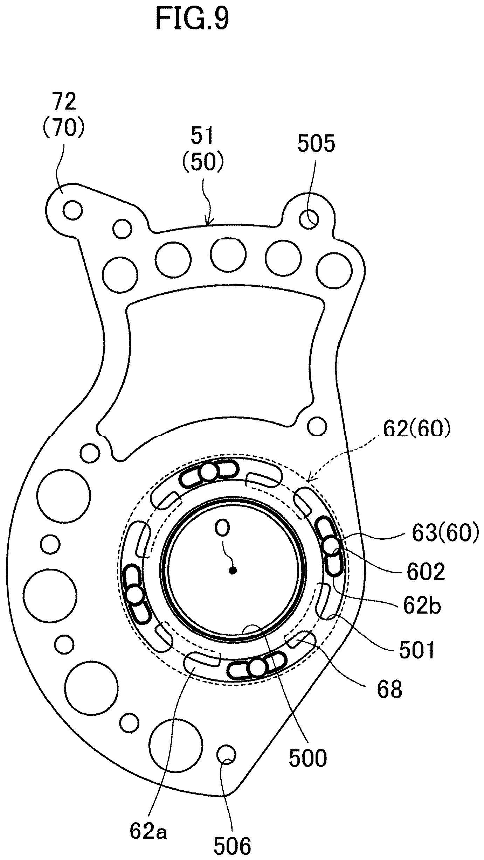

Configurations of respective components of the cut-off machine 10 according to the first embodiment will be described blow with reference to FIGS. 1 to 9. Note that FIG. 4 is a side view illustrating the cut-off machine 10 with the blade 21 detached (i.e., a plan view viewed from a later-described second fixed-guard part 46). FIG. 5 is a side view illustrating, on an enlarged scale, a configuration of the coupling mechanism 60 and the vicinity thereof (i.e., a plan view viewed from the later-described second fixed-guard part 46). FIG. 6 is a cross-sectional view taken along line A-O-B in FIG. 5. Each of FIGS. 7 and 8 is an exploded perspective view of the configuration of the coupling mechanism 60 and the vicinity thereof. FIG. 9 is a side view illustrating a configuration of a later-described movable base 51, a second coupling member 62, and coupling bolts 63 (i.e., a plan view viewed from the later-described second fixed-guard part 46).

### [Configuration of Holding Mechanism]

The holding mechanism 30 is configured to hold the blade 21 with respect to the rotary shaft 20. Specifically, the holding mechanism 30 includes a pair of holding members (first and second holding members 31 and 32), a fixing member 33, a washer 34, and a mounting bolt 35.

### <Holding Members>

Each of the first and second holding members 31 and 32 has an annular shape. The first and second holding members 31 and 32 sandwich the blade 21 therebetween. In this example, the first holding member 31 is disposed on a side of the blade 21, which is adjacent to the coupling mechanism 60 (specifically, on the left side), and the second holding member 32 is disposed on a side of the blade 21, which is remote from the coupling mechanism 60 (specifically, on the right side).

### <Fixing Member and Washer>

The fixing member 33 has an annular shape, and is fixed while the rotary shaft 20 passes through the fixing member 33. The washer 34 has an annular shape. The pair of holding members (first and second holding members 31 and 32) is sandwiched between the washer 34 and the fixing member 33. In this example, the first holding member 31 is disposed between the fixing member 33 and the blade 21, and the second holding member 32 is disposed between the blade 21 and the washer 34

### <Mounting Bolt>

The mounting bolt 35 is inserted into the washer 34 and is screwed into the rotary shaft 20. With this configuration, screwing the mounting bolt 35 into the rotary shaft 20 causes the first and second holding members 31 and 32 to be clamped tightly by the fixing member 33 and the washer 34, and the blade 21 to be clamped tightly by the first and second holding members 31 and 32. In this manner, the rotary shaft 20 can be held with respect to the blade 21. On the other hand, loosening the mounting bolt 35 screwed into the rotary shaft 20 reduces the tightness with which the first and second holding members 31 and 32 is clamped by the fixing member 33 and the washer 34, and the tightness with which the blade 21 is clamped by the first and second holding members 31 and 32. In this manner, the blade 21 can be detached from the rotary shaft 20.

### <Holding Ring>

In this example, a holding ring 36 having an annular shape is provided between an outer peripheral surface of the rotary shaft 20 and an inner peripheral surface of the insertion hole 201 of the blade 21. Specifically, the rotary shaft 20 is fitted into the holding ring 36, and the holding ring 36 is fitted into the insertion hole 201 of the blade 21.

### [Configuration of Fixed Guard]

The fixed guard 40 is configured to cover a portion of the outer periphery of the blade 21 (in this example, a rear portion of the blade 21). In this example, the fixed guard 40 includes a fixed support 41, a first fixed-guard part 45, and a second fixed-guard part 46. In addition, in this example, the fixed guard 40 is made of a light alloy such as an aluminum alloy.

### <Fixed Support>

The fixed support 41 has a bearing portion 42. The bearing portion 42 is configured to rotatably support the rotary shaft 20. In this example, the fixed support 41 is disposed adjacent to an end surface (left side) of the blade 21. The fixed support 41 has a cylindrical shape, and the bearing portion 42 is disposed in a central portion of the fixed support 41. The fixing member 33, the first holding member 31, the blade 21, the second holding member 32, and the washer 34 are arranged sequentially in a direction from the bearing portion 42 of the fixed support 41 toward the mounting bolt 35.

### <First Fixed-Guard Part>

The first fixed-guard part 45 extends from the fixed support 41 outward in a radial direction so as to cover a portion of the blade 21. In this example, the first fixed-guard part 45 is disposed adjacent to one end surface (left side) of the blade 21. The first fixed-guard part 45 has a fan shape of which the center corresponds to the rotary shaft 20, and the outer peripheral edge thereof is located outside in a radial direction with respect to the outer peripheral edge of the blade 21 (i.e., located further remote from the shaft center O of the rotary shaft 20). Note that in this example, the fixed support 41 and the first fixed-guard part 45 are formed integrally with each other.

### <Second Fixed-Guard Part>

The second fixed-guard part 46 is disposed so as to face the first fixed-guard part 45 in the axial direction of the rotary shaft 20, has an outer peripheral edge coupled to the outer peripheral edge of the first fixed-guard part 45. In this example, the second fixed-guard part 46 is disposed adjacent to the other end surface (the right side) of the blade 21. The second fixed-guard part 46 has an arc shape so as to extend along the outer peripheral edge of the first fixed-guard part 45 around the rotary shaft 20.

### <Coupling Portion>

The first fixed-guard part 45 is provided with a coupling portion 47. The coupling part 47 is coupled to the housing 11, and houses therein part of the above-described power transmission mechanism (that transmits the power of the drive source housed in the housing 11 to the rotary shaft 20 supported on the bearing portion 42 and the dust collecting mechanism 12).

### <Reinforcing Part>

A reinforcing part 48 is provided on a circumferential end portion of the fixed guard 40 (specifically, an upstream end portion in the normal rotation direction). Note that it is preferable that the reinforcing part 48 is made of a material (for example, iron) which is stronger than the material (for example, a light alloy) forming the fixed guard 40.

### [Configuration of Movable Guard]

The movable guard 50 is configured to movably cover portions of the outer periphery of the blade 21, which are each adjacent to the portion covered with the fixed guard 40 in the circumferential direction of the blade 21 (in this example, an upper portion and a lower portion of the blade 21). In this example, the movable guard 50 includes a movable base 51, a first movable-guard part 55, and a second movable-guard part 56. In this example, the first movable-guard part 55 and the second movable-guard part 56 are each made of a light alloy such as an aluminum alloy. The movable base 51 is made of a material (for example, iron) which is stronger than the material forming each of the first movable-guard part 55 and the second movable-guard part 56.

### <Movable Base>

The movable base 51 is shaped so as to surround the periphery of the rotary shaft 20. In this example, the movable base 51 has a plate shape having an opening 500 formed in a central portion thereof. The opening 500 passes through the movable base 51 in an axial direction and has a circular shape surrounding the entire periphery of the rotary shaft 20. The rotary shaft 20 and the fixing member 33 are disposed in the opening 500. In other words, the movable base 51 is formed so as to surround the periphery of the fixing member 33.

### «Slots»

In this example, the movable base 51 is provided with a plurality of (specifically, four) slots 501. The plurality of slots 501 pass through the movable base 51 in the axial direction. Each slot 501 has an arc shape extending along the circumferential direction of the rotary shaft 20. In this example, the four slots 501 are arranged at 90-degree intervals in the circumferential direction.

### <First and Second Movable-Guard Parts>

The first movable-guard part 55 extends from the movable base 51 toward one circumferential end portion of the fixed guard 40, and is configured to movably cover a portion of the outer periphery of the blade 21, the portion being adjacent to one circumferential end of the portion covered with the fixed guard 40 (in this example, an upper portion of the blade 21). Specifically, the first movable-guard part 55 is in a plate shape, and has a distal end portion bended in a U-shape so as to cover the portion of the outer periphery of the blade 21 (in this example, the upper portion of the blade 21). In addition, the first movable-guard part 55 is retractable in the fixed guard 40.

The second movable-guard part 56 extends from the movable base 51 toward the other circumferential end portion of the fixed guard 40, and is configured to movably cover a portion of the outer periphery of the blade 21, the portion being adjacent to the other circumferential end of the portion covered with the fixed guard 40 (in this example, a lower portion of the blade 21). Specifically, the second movable-guard part 56 is in a plate shape, and has a distal end portion bended in a U-shape so as to cover the portion of the outer periphery of the blade 21 (in this example, the lower portion of the blade 21). In addition, the second movable-guard part 56 is retractable in the fixed guard 40.

With this configuration, when the movable base 51 is turned around the rotary shaft 20, one of the first movable-guard part 55 and the second movable-guard part 56 moves in a direction so as to enter the inside of the fixed guard 40, and at the same time, the other moves in a direction so as to come out of the fixed guard 40.

In addition, the first movable-guard part 55 is provided with a first recess 55a into which a portion of the movable base 51 (in this example, an upper end portion) is fitted. The first movable-guard part 55 is fixed with a plurality of (in this example, four) first fixing bolts 515 to a portion of the movable base 51 (the portion fitted into the first recess 55a). Specifically, this portion of the movable base 51 (the portion fitted into the first recess 55a) is provided with a plurality of (in this example, four) first fixing bolt holes 505, and the first recess 55a is provided with a plurality of (in this example, four) first communicating holes (not shown) which respectively communicate with the plurality of first fixing bolt holes 505. The first fixing bolts 515 are inserted into the first communicating holes of the first movable-guard part 55, and are screwed into the first fixing bolt holes 505 of the movable base 51.

The second movable-guard part 56 is provided with a second recess 56a into which a portion of the movable base 51 (in this example, a lower end portion) is fitted. The second movable-guard part 56 is fixed with a plurality of (in this example, four) second fixing bolts 516 to the portion of the movable base 51 (a portion fitted into the second recess 56a). Specifically, this portion of the movable base 51 (the portion fitted into the second recess 56a) is provided with a plurality of (in this example, four) second fixing bolt holes 506, and the second recess 56a is provided with a plurality of (in this example, four) second communicating holes (not shown) which respectively communicate with the plurality of second fixing bolt holes 506. The second fixing bolts 516 are inserted into the second communicating holes of the second movable-guard part 56, and are screwed into the second fixing bolt holes 506 of the movable base 51.

### [Configuration of Coupling Mechanism]

The coupling mechanism 60 is configured to couple the movable guard 50 to the fixed guard 40 such that the movable guard 50 can be turned around the rotary shaft 20. Specifically, the coupling mechanism 60 includes a first coupling member 61, the second coupling member 62, and the plurality of (in this example, four) coupling bolts 63.

### <First Coupling Member>

The first coupling member 61 is disposed between the fixed support 41 and the movable base 51. In this example, the first coupling member 61 has a first annular part 61a and a first cylindrical part 61b.

### «First Annular Part»

The first annular part 61a is in an annular shape and is disposed between the fixed support 41 and the movable base 51. In this example, a length between the outer peripheral edge of the first annular part 61a (the first coupling member 61) and the shaft center O of the rotary shaft 20 in a radial direction is equal to or shorter than a length between outer peripheral edges of the first and second holding members 31 and 32 (precisely speaking, one of the outer peripheral edges of the first and second holding members 31 and 32, which is remoter from the shaft center O) and the shaft center O of the rotary shaft 20 in the radial direction.

### «First Cylindrical Part»

The first cylindrical part 61b is in a cylindrical shape, and provided on an inner peripheral edge portion of the first annular part 61a. The first cylindrical part 61b projects from the first annular part 61a into an inside of an inner peripheral edge of the movable base 51 (in this example, into the opening 500). In this example, the first cylindrical part 61b is slidably fitted into the inner peripheral edge (specifically, the opening 500) of the movable base 51, and the inner peripheral surface of the first cylindrical part 61b faces the outer peripheral surface of the fixing member 33. Note that in this example, the first cylindrical part 61b is formed integrally with the first annular part 61a.

### «First Insertion Holes»

The first coupling member 61 is provided with a plurality of (in this example, four) first insertion holes 601 which respectively correspond to the plurality of slots 501 of the movable base 51. The plurality of first insertion holes 601 pass through the first coupling member 61 (in this example, the first annular part 61a) in the axial direction and respectively communicate with the plurality of slots 501. In this example, the four first insertion holes 601 are arranged at 90-degree intervals in the circumferential direction.

### <Second Coupling Member>

The second coupling member 62 is disposed between the movable base 51 and the pair of holding members (in this example, the first holding member 31). The movable base 51 is slidably clamped between the second coupling member 62 and the first coupling member 61. In this example, the second coupling member 62 has a second annular part 62a.

### «Second Annular Part»

The second annular part 62a is in an annular shape and is disposed between the movable base 51 and the pair of holding members (in this example, the first holding member 31). In this example, a length between the outer peripheral edge of the second annular part 62a (second coupling member 62) and the shaft center O of the rotary shaft 20 in a radial direction is equal to or shorter than a length between the outer peripheral edges of the first and second holding members 31 and 32 (precisely speaking, one of the outer peripheral edges of the first and second holding members 31 and 32, which is remoter from the shaft center O) and the shaft center O of the rotary shaft 20 in the radial direction. In addition, the second annular part 62a and the first annular part 61a face each other with the movable base 51 interposed therebetween. Further, the first cylindrical part 61b is fitted into the second annular part 62a.

### «Protrusions»

In this example, the second coupling member 62 has a plurality of (in this example, four) protrusions 62b which respectively correspond to the plurality of slots 501 of the movable base 51. The plurality of protrusions 62b respectively protrude into the plurality of slots 501. In this example, each of the protrusions 62b has an arc shape extending along the slot 501 and protrudes from the second annular part 62a into the slot 501. The four protrusions 62b are arranged at 90-degree intervals in the circumferential direction. Note that in this example, the plurality of protrusions 62b are formed integrally with the second annular part 62a.

In this example, in each protrusion 62b, a portion located radially outside a second insertion hole 602 and a portion located radially inside the associated second insertion hole 602 are cut out. In other words, each of the protrusions 62b is comprised of two projections which are disposed on both circumferential sides of the second insertion hole 602. Each protrusion 62b has a length, in the radial direction, which allows the protrusion 62b to function as a fastening bearing surface for the associated coupling bolt 63 (for example, a length which is equivalent to a diameter of the coupling bolt 63). In addition, the length of each protrusion 62b in the radial direction is set to be shorter than a length of each slot 501 in the radial direction. For example, if the outer diameter (nominal diameter) of a threaded portion of each coupling bolt 63 is 4 mm, the length of each protrusion 62b in the radial direction is set to be approximately 4 mm and the length of each slot 501 in the radial direction is set to be approximately 5 mm. Note that the length of each protrusion 62b in the radial direction may be longer than, or shorter than, the outer diameter of the threaded portion of each coupling bolt 63. Alternatively, the length of the threaded portion of each coupling bolt 63 may be the same as the outer diameter of the threaded portion of each coupling bolt 63.

### «Second Insertion Holes»

The second coupling member 62 is provided with the plurality of (in this example, four) the second insertion holes 602 which respectively correspond to the plurality of slots 501. Each of the plurality of second insertion holes 602 passes through the second coupling member 62 (in this example, the second annular part 62a) in the axial direction and is configured to communicate with an associated one of the plurality of slots 501. In this example, the four second insertion holes 602 are arranged at 90-degree intervals in the circumferential direction.

In this example, each of the plurality of second insertion holes 602 is formed in an associated one of the plurality of protrusions 62b. Specifically, each second insertion hole 602 is formed in a central portion of the associated protrusion 62b in plan view. In other words, in plan view, on the both circumferential sides of each second insertion hole 602, the protrusion 62b is provided. With this configuration, the coupling bolts 63 inserted into the second insertion holes 602 are supported on the protrusions 62b.

### <Coupling Bolts>

The plurality of (in this example, four) coupling bolts 63 fix the first coupling member 61 (in this example, the first coupling member 61 and the second coupling member 62) to the fixed support 41. The plurality of coupling bolts 63 are sequentially inserted into the second insertion holes 602, the slots 501, and the first insertion holes 601 and are screwed into the fixed support 41. Note that the fixed support 41 is provided with a plurality of (in this example, four) coupling bolt holes 43 which respectively correspond to the plurality of coupling bolts 63. The four coupling bolts 63 are screwed into the four coupling bolt holes 43, respectively.

As described above, the coupling bolts 63, which are sequentially inserted into the second insertion holes 602 of the second coupling member 62, the slots 501 of the movable base 51, and the first insertion holes 601 of the first coupling member 61, are screwed into the fixed support 41, thereby allowing the movable base 51 to be slidably clamped between the first coupling member 61 and the second coupling member 62.

### [Positional Relationship between Main Components]

In the cut-off machine 10 according to the first embodiment, the plurality of coupling bolts 63 is located closer to the rotary shaft 20 than the outer peripheral edges of the first and second holding members 31 and 32 (precisely speaking, one of the outer peripheral edges of the first and second holding members 31 and 32, which is remoter from the shaft center O) are. In other words, the plurality of coupling bolts 63 is located at a position close to the shaft center O of the rotary shaft 20. The inner peripheral edge of the movable base 51 (in this example, the inner peripheral edge of the opening 500) is located closer to the rotary shaft 20 than the plurality of coupling bolts 63 is.

### [Sealing Members]

The cut-off machine 10 includes a first sealing member 65, a second sealing member 66, and a third sealing member 67. In this example, each of the first, second, and third sealing members 65, 66, and 67 is comprised of an O-ring.

The first sealing member 65 seals a space between the first coupling member 61 and the movable base 51. In this example, the first sealing member 65 is in a ring shape. A first ring groove 605 into which the first sealing member 65 is fitted is provided in an outer peripheral portion of a surface of the first annular part 61a (in this example, a right end surface), which faces the movable base 51. With this configuration, the space between the first annular part 61a and the movable base 51 is sealed.

The second sealing member 66 seals a space between the movable base 51 and the second coupling member 62. In this example, the second sealing member 66 is in a ring shape. A second ring groove 606 into which the second sealing member 66 is fitted is provided in an outer peripheral portion of a surface of the second annular part 62a (in this example, the left end surface), which faces the movable base 51. With this configuration, the space between the second annular part 62a and the movable base 51 is sealed.

The third sealing member 67 seals a space between the first coupling member 61 and the second coupling member 62. In this example, the third sealing member 67 is in a ring shape. A third ring groove 607 into which the third sealing member 67 is fitted is provided in an outer peripheral surface of a distal end portion of the first cylindrical part 61b (in a portion of the outer peripheral surface thereof, which faces the inner peripheral surface of the second annular part 62a). With this configuration, the space between the first cylindrical part 61b and the second annular part 62a is sealed.

### [Grease Grooves]

In addition, a plurality of (in this example, four) grease grooves 68 are provided in a surface of the second coupling member 62 (specifically, the second annular part 62a), which faces the movable base 51. Grease collects in the grease grooves 68. In this example, each of the grease grooves 68 is in an arc shape extending in the circumferential direction of the rotary shaft 20. The four grease grooves 68 are arranged at 90-degree intervals in the circumferential direction. In other words, in this example, the protrusions 62b and the grease grooves 68 alternate each other in the circumferential direction.

### [Biasing Mechanism]

The cut-off machine 10 is further provided with a biasing mechanism 70. The biasing mechanism 70 is configured to bias the movable guard 50 in a predetermined rotation direction (in this example, the reverse rotation direction). Specifically, the biasing mechanism 70 includes an elastic member 71, a first engaging part 72, and a second engaging part 73. The elastic member 71 is comprised of, for example, an extension coil spring. The first engaging part 72 is provided at the movable guard 50 (specifically, the movable base 51) and is engaged with one end of the elastic member 71. The second engaging part 73 is provided at the fixed guard 40 (specifically, the first fixed-guard part 45) and is engaged with the other end of the elastic member 71. In this example, a hook is provided at each of the ends of the elastic member 71. The hook provided at the one end of the elastic member 71 is hooked to the first engaging part 72, and the hook provided at the other end of the elastic member 71 is hooked to the second engaging part 73.

### [Stopper]

The cut-off machine 10 is provided with a stopper (not shown) which restricts the turn of the movable guard 50. In this example, the stopper is configured to restrict the turn of the movable guard 50 (specifically, turn in the reverse rotation direction) so as to prevent the first movable-guard part 55 from turning in the reverse rotation direction (in the clockwise direction in FIG. 4) beyond a predetermined position of turn.

### [Behavior of Movable Guard]

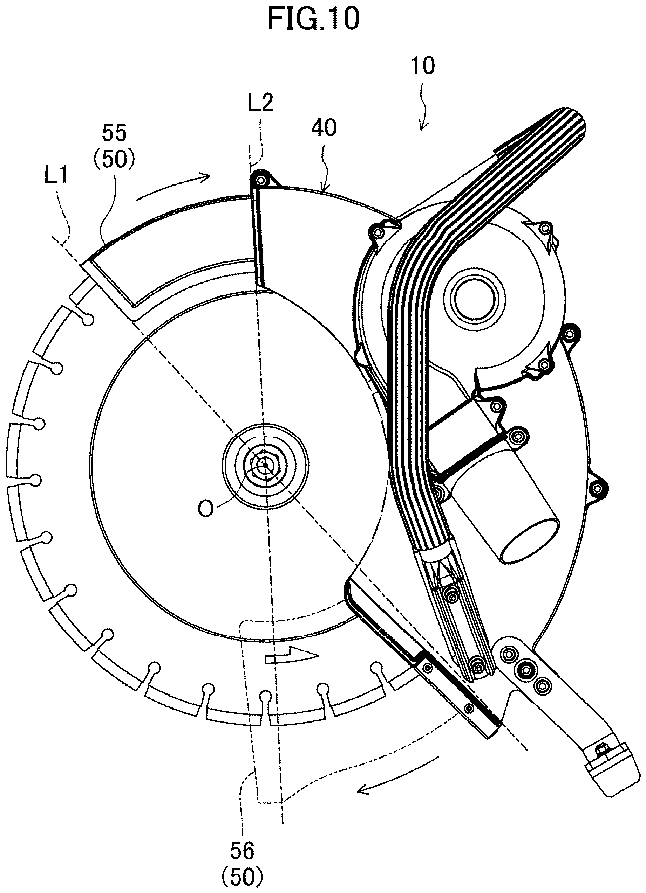

Next, behavior of the movable guard 50 will be described with reference to FIG. 10. Note that in FIG. 10, a first virtual line L1 is a virtual line which passes through one circumferential end portion (specifically, a downstream end portion in the normal rotation direction) of the first movable-guard part 55 and the shaft center O of the rotary shaft 20 when the second movable-guard part 56 is retracted in the fixed guard 40 and the first movable-guard part 55 is positioned outside the fixed guard 40 (in other words, when the first movable-guard part 55 is in a fully-closed state and the second movable-guard part 56 is in a fully-opened state). A second virtual line L2 is a virtual line which passes through the one circumferential end portion of the first movable-guard part 55 and the shaft center O of the rotary shaft 20 when the first movable-guard part 55 is retracted in the fixed guard 40 and the second movable-guard part 56 is positioned outside the fixed guard 40 (in other words, the first movable-guard part 55 is in a fully-opened state and the second movable-guard part 56 is in a fully-closed state).

When a user presses the second movable-guard part 56 onto a cutting target in order to cut the cutting target with a lower portion of the blade 21, the movable guard 50 turns in the normal rotation direction (i.e., a counterclockwise direction in FIG. 10), against a biasing force (a force biasing the movable guard 50 in the reverse rotation direction) of the biasing mechanism 70. Consequently, the second movable-guard part 56 moves in a direction so as to enter the inside of the fixed guard 40, and at the same time, the first movable-guard part 55 moves in a direction so as to come out of the fixed guard 40. As a result, the lower portion of the blade 21 is exposed while an upper portion of the blade 21 is covered with the first movable-guard part 55.

On the other hand, when the user stops pressing the second movable-guard part 56 onto the cutting target, the biasing force of the biasing mechanism 70 causes the movable guard 50 to turn in the reverse rotation direction (in a clockwise direction in FIG. 10). Consequently, the first movable-guard part 55 moves in a direction so as to enter the inside of the fixed guard 40, and at the same time, the second movable-guard part 56 moves in a direction so as to come out of the fixed guard 40. As a result, the upper portion of the blade 21 is exposed while the lower portion of the blade 21 is covered with the second movable-guard part 56.

As indicated by the first virtual line L1, when the second movable-guard part 56 is retracted in the fixed guard 40 and the first movable-guard part 55 is positioned outside the fixed guard 40 (in other words, when the first movable-guard part 55 is in the fully-closed state and the second movable-guard part 56 is in the fully-opened state), the outer periphery of the blade 21 is covered with the first movable-guard part 55 and the fixed guard 40 in an angular range of 180° or more. As indicated by the second virtual line L2, when the first movable-guard part 55 is retracted in the fixed guard 40 and the second movable-guard part 56 is positioned outside the fixed guard 40 (in other words, the first movable-guard part 55 is in the fully-opened state and the second movable-guard part 56 is in the fully-closed state), the outer periphery of the blade 21 is covered with the second movable-guard part 56 and the fixed guard 40 in an angular range of 180° or more. As can be seen, the first movable-guard part 55 and the second movable-guard part 56 move complementarily, thereby maintaining a state in which a predetermined angle range of the outer periphery of the blade 21 (in this example, a range of 180° or more) is covered. In other words, the fixed guard 40 and the movable guard 50 are configured to constantly cover the predetermined angle range of the outer periphery of the blade 21 (in this example, the range of 180° or more).

### [Comparison between Embodiment and Comparative Example]

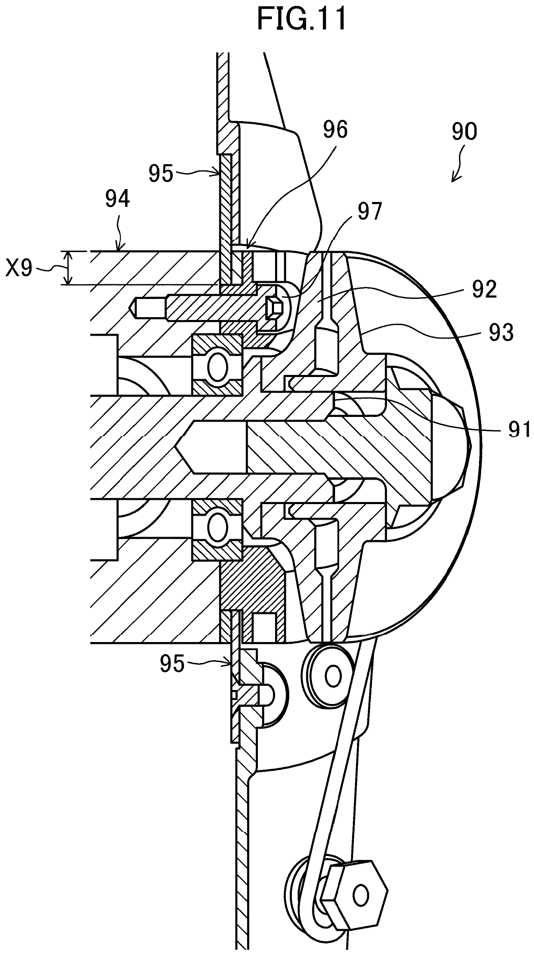

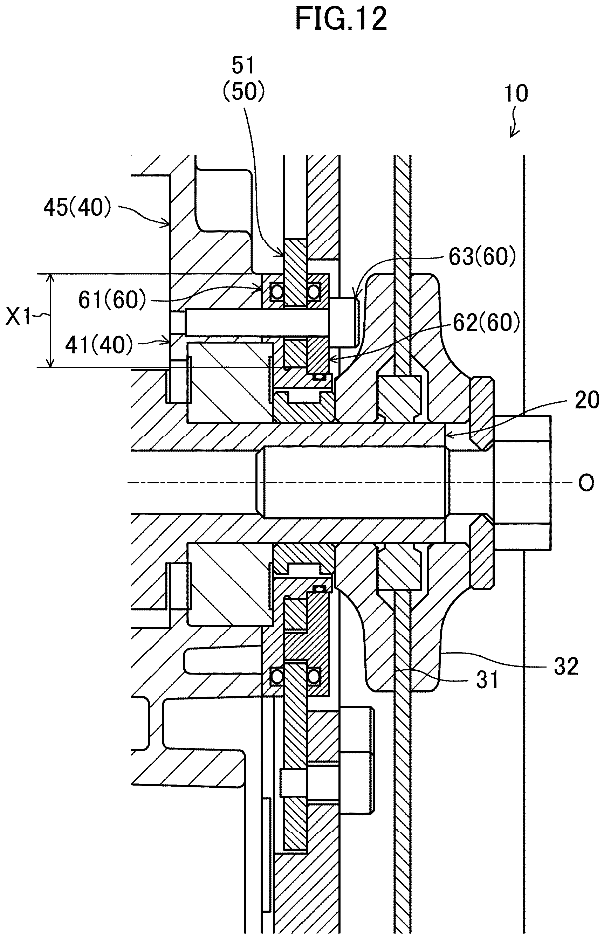

Next, with reference to FIGS. 11 and 12, the cut-off machine 10 of the first embodiment and a cut-off machine of a comparative example (hereinafter, described as the "cut-off machine 90") will be compared and described.

FIG. 11 exemplifies a configuration of the cut-off machine 90. The cut-off machine 90 includes a rotary shaft 91, a blade (not shown), a pair of holding members 92 and 93, a fixed guard 94, a movable guard 95, a coupling member 96, and coupling bolts 97. The blade is clamped between the pair of holding members 92 and 93, and is held by the rotary shaft 91. The rotary shaft 91 is rotatably supported on the fixed guard 94. The movable guard 95 is slidably clamped between the fixed guard 94 and the coupling member 96. The coupling member 96 is fixed to the fixed guard 94 with the coupling bolts 97. With this configuration, the movable guard 95 can be turned around the rotary shaft 91.

For the cut-off machine 90 illustrated in FIG. 11, if an external force acts on the movable guard 95 to deform the movable guard 95 in an axial direction, the movable guard 95 and the fixed guard 94 contact with each other, thereby increasing friction between the movable guard 95 and the fixed guard 94. As a result, it becomes difficult to smoothly turn the movable guard 95. Note that in the cut-off machine 90 illustrated in FIG. 11, an inner peripheral edge of the movable guard 95 is not located closer to the rotary shaft 91 than the coupling bolts 97 are (in other words, the coupling bolts 97 are located closer to the rotary shaft 91 than the inner peripheral edge of the movable guard 95 is). It is therefore difficult to radially inwardly expand a portion which serves as a receiving surface for the movable guard 95. Note that in the example illustrated in FIG. 11, the portion serving as the receiving surface for the movable guard 95 corresponds to a portion of the fixed guard 94 and a portion of the coupling member 96, the portions overlapping with the movable guard 95 in the axial direction of the rotary shaft 91. Consequently, in the cut-off machine 90 illustrated in FIG. 11, in order to reduce the above-described deformation in the movable guard 95, it is conceivable to increase a length X9 of the portion serving as the receiving surface for the movable guard 95 (i.e., a length in the radial direction of the portion serving as the receiving surface for the movable guard 95). Such an increase in the length could be achieved by radially outwardly expanding the portion serving as the receiving surface for the movable guard 95. However, if the portion serving as the receiving surface for the movable guard 95 (in particular, a portion which faces a cutting target when the blade cuts the cutting target; in this example, a front portion) is radially outwardly expanded beyond the outer peripheral edges of the pair of holding members 92 and 93, a maximum cutting depth of the blade (not shown) becomes shallow. For this reason, for the cut-off machine 90 illustrated in FIG. 11, it is difficult to increase the length X9 of the receiving surface for the movable guard 95 while reducing a decrease in the maximum cutting depth of the blade.

FIG. 12 exemplifies a configuration of the cut-off machine 10 according to the first embodiment. As illustrated in FIG. 12, in the cut-off machine 10, the movable base 51 is formed such that the inner peripheral edge of the movable guard 50 (movable base 51) is located closer to the rotary shaft 20 than the coupling bolts 63 are. This configuration makes it possible to increase a length X1 of a receiving surface for the movable guard 50 (i.e., a length in the radial direction of a portion serving as the receiving surface for the movable guard 50) by radially outwardly expanding the portion serving as the receiving surface for the movable guard 50. Note that in this example, the portion serving as the receiving surface for the movable guard 50 corresponds to a portion of the first coupling member 61 and a portion of the second coupling member 62, the portions overlapping with the movable base 51 in the axial direction of the rotary shaft 20.

### [Effects Attained by First Embodiment]

As described above, the configuration, in which the movable base 51 is formed such that the inner peripheral edge of the movable guard 50 (movable base 51) is located closer to the rotary shaft 20 than the coupling bolts 63 are, makes it possible to radially inwardly expand the portion serving as the receiving surface for the movable guard 50 (in this example, the portions of the first and second coupling members 61 and 62, which overlap with the movable base 51 in the axial direction of the rotary shaft 20) to a greater extent than in a case where the inner peripheral edge of the movable guard 50 is located remoter from the rotary shaft 20 than the coupling bolts 63 are. Thus, the length X1 of the receiving surface for the movable guard 50 can be increased so as not to expand the portion serving as the receiving surface for the movable guard 50 (in particular, a portion which faces a cutting target when the blade cuts the cutting target; in this example, a front portion of the first coupling member 61 and a front portion of the second coupling member 62) outward in the radial direction (or so as to reduce the outward expansion in the radial direction). This feature makes it possible to increase the length X1 of the receiving surface for the movable guard 50 while reducing a decrease in the maximum cutting depth of the blade. Increasing the length X1 of the receiving surface for the movable guard 50 in this manner makes it possible to reduce deformation (deformation in the axial direction) of the movable guard 50 which may be caused by an external force, thereby enabling enhancement of the durability of the movable guard 50.

Further, in this example, the coupling bolts 63 are disposed closer to the rotary shaft 20 than the outer peripheral edges of the pair of holding members 31 and 32 are. This configuration allows the inner peripheral edge of the movable guards (movable base 51) to be positioned further closer to the rotary shaft 20 than in a case where the coupling bolts 63 are located remoter from the rotary shaft 20 than the outer peripheral edges of the pair of holding members 31 and 32 are. Thus, the length X1 of the receiving surface for the movable guard 50 can be further increased.

In addition, the configuration, in which the second coupling member 62 is provided with the protrusions 62b and the second insertion holes 602 are formed in the protrusions 62b, allows the coupling bolts 63 inserted in the second insertion holes 602 to be supported on the protrusions 62b. In other words, this configuration allows the protrusions 62b to function as fastening bearing surfaces for the coupling bolts 63. Thus, the coupling bolts 63 can be fastened easy.

In addition, in each of the protrusions 62b of the second coupling member 62, a portion located radially outside the associated second insertion hole 602 and a portion located radially inside the associated second insertion hole 602 are cut out. This configuration allows a decrease in the length in the radial direction of each of the protrusions 62b of the second coupling member 62. As a result, the second coupling member 62 (in this example, the second annular part 62a) can be reduced in size. In addition, such a decrease in the length in the radial direction of each protrusion 62b allows a decrease in the length in the radial direction of each slot 501 (in which the protrusion 62b is disposed) of the movable base 51. As a result, the movable base 51 can be reduced in size. As described above, a space in which the sealing members (in this example, the first and second sealing member 65 and 66) are provided can be ensured while a decrease in the maximum cutting depth of the blade 21 is reduced.

In addition, the provision of the first, second, and third sealing members 65, 66, and 67 makes it possible to reduce entry of dust particles into the coupling mechanism 60. As a result, deterioration in sliding of the movable base 51 which may be caused by the entry of dust particle into the coupling mechanism 60 can be prevented or reduced.

In addition, the grease grooves 68 allow the movable base 51 to slide smoothly.

Further, the first movable-guard part 55 and the second movable-guard part 56 are moved complementarily to each other, thereby allowing the predetermined angle range (in this example, the range of 180° or more) of the outer periphery of the blade 21 to be covered constantly.

### (Second Embodiment)

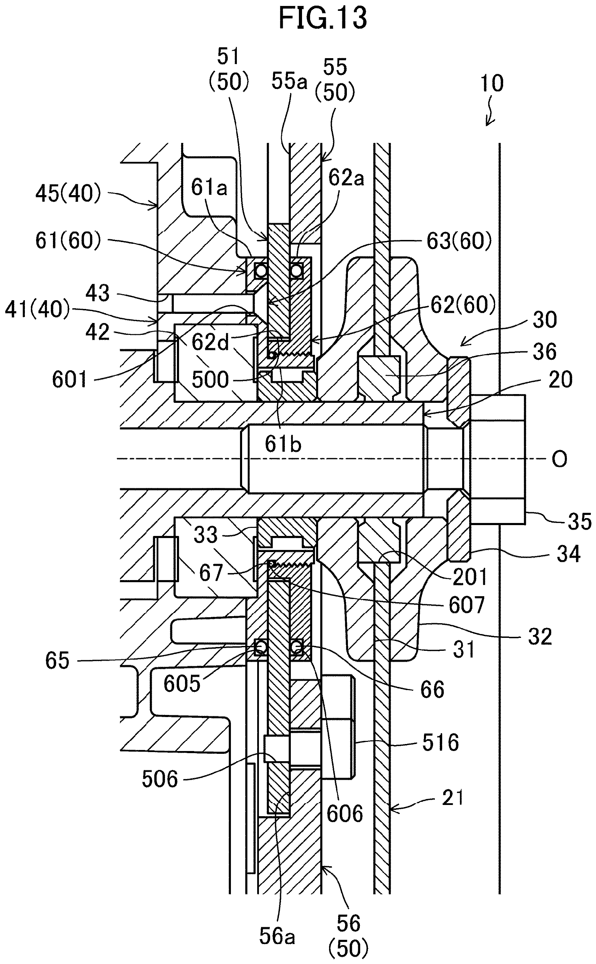

FIG. 13 exemplifies a configuration of a cut-off machine 10 according to a second embodiment, which is not according to the invention. The cut-off machine 10 according to the second embodiment is different from the cut-off machine 10 according to the first embodiment in configurations of a movable base 51 and a coupling mechanism 60. In the second embodiment, no slot 501 is formed in the movable base 51. In the second embodiment, the coupling mechanism 60 is configured as described below.

### [Coupling Mechanism]

The coupling mechanism 60 includes a first coupling member 61, a second coupling member 62, and a plurality of (in this example, four) coupling bolts 63.

### <First Coupling Member>

The first coupling member 61 is disposed between a fixed support 41 and the movable base 51. In this example, the first coupling member 61 has a first annular part 61a and a first cylindrical part 61b.

### «First Annular Part»

The first annular part 61a has an annular shape and is disposed between the fixed support 41 and the movable base 51. In this example, a length between the outer peripheral edge of the first annular part 61a (first coupling member 61) and a shaft center O of a rotary shaft 20 in a radial direction is equal to or shorter than a length between outer peripheral edges of first and second holding members 31 and 32 (precisely speaking, one of the outer peripheral edges of the first and second holding members 31 and 32, which is remoter from the shaft center O) and the shaft center O of the rotary shaft 20 in the radial direction.

### «First Cylindrical Part»

The first cylindrical part 61b has a cylindrical shape, and is provided on an inner peripheral edge portion of the first annular part 61a. The first cylindrical part 61b projects from the first annular part 61a into an inside of an inner peripheral edge of the movable base 51 (in this example, into an opening 500). Note that in this example, the first cylindrical part 61b is formed integrally with the first annular part 61a.

### «First Insertion Holes»

The first coupling member 61 is provided with a plurality of (in this example, four) first insertion holes 601 which respectively correspond to the plurality of coupling bolts 63. The plurality of first insertion holes 601 pass through the first coupling member 61 (in this example, the first annular part 61a) in the axial direction. In this example, the four first insertion holes 601 are arranged at 90-degree intervals in a circumferential direction.

### <Second Coupling Member>

The second coupling member 62 is disposed between the movable base 51 and the pair of holding members (in this example, the first holding member 31). The movable base 51 is slidably clamped between the second coupling member 62 and the first coupling member 61. In this example, the second coupling member 62 has a second annular part 62a and a second cylindrical part 62d.

### «Second Annular Part»

The second annular part 62a is in an annular shape and is disposed between the movable base 51 and the pair of holding members (in this example, the first holding member 31). In this example, a length between the outer peripheral edge of the second annular part 62a (second coupling member 62) and the shaft center O of the rotary shaft 20 in the radial direction is equal to or shorter than a length between the outer peripheral edges of the first and second holding members 31 and 32 (precisely speaking, one of the outer peripheral edges of the first and second holding members 31 and 32, which is remoter from the shaft center O) and the shaft center O of the rotary shaft 20 in the radial direction. In addition, the second annular part 62a and the first annular part 61a face each other with the movable base 51 interposed therebetween.

### «Second Cylindrical Part»

The second cylindrical part 62d has a cylindrical shape, is provided on an inner peripheral edge portion of the second annular part 62a, and projects from the second annular part 62a into the inner peripheral edge of the movable base 51 (in this example, into the opening 500). Note that in this example, the second cylindrical part 62d is formed integrally with the second annular part 62a.

### <Coupling Bolts>

The plurality of (in this example, four) coupling bolts 63 fix the first coupling member 61 to the fixed support 41. In this example, the plurality of coupling bolts 63 are inserted into the first insertion holes 601, respectively and are screwed into the fixed support 41. Note that the fixed support 41 is provided with a plurality of (in this example, four) coupling bolt holes 43 which respectively correspond to the plurality of coupling bolts 63. The four coupling bolts 63 are screwed into the four coupling bolt holes 43, respectively.

### <Configurations of First and Second Cylindrical Parts>

In the second embodiment, the inner peripheral surface of one of the first cylindrical part 61b and the second cylindrical part 62d is formed in a female-screw shape, and the outer peripheral surface of the other is formed in a male-screw shape corresponding to the female-screw shape. One of the first cylindrical part 61b and the second cylindrical part 62d is screwed into the other. In this example, the inner peripheral surface of the second cylindrical part 62d is formed in the female-screw shape, and the outer peripheral surface of the first cylindrical part 61b is formed in the male-screw shape. The first cylindrical part 61b is screwed into the second cylindrical part 62d.

Thus, one (i.e., the cylindrical part whose inner peripheral surface is formed in the female-screw shape) of the of the first cylindrical part 61b and the second cylindrical part 62d receives the other (i.e., the other cylindrical part whose inner peripheral surface is formed in the male-screw shape) screwed therein, thereby allowing the movable base 51 to be slidably clamped between the first coupling member 61 and the second coupling member 62.

### [Positional Relationship between Main Components]

Like the first embodiment, in the cut-off machine 10 according to the second embodiment, each of the plurality of coupling bolts 63 is located closer to the rotary shaft 20 than the outer peripheral edges of the first and second holding members 31 and 32 (precisely speaking, one of the outer peripheral edges of the first and second holding members 31 and 32, which is remoter from the shaft center O) are. In other words, the plurality of coupling bolts 63 is located at a position close to the shaft center O of the rotary shaft 20. The inner peripheral edge of the movable base 51 (in this example, the inner peripheral edge of the opening 500) is located closer to the rotary shaft 20 than the plurality of coupling bolts 63 is.

### [Sealing Member]

The second embodiment includes a third sealing member 67 having a ring shape. A third ring groove 607 into which the third sealing member 67 is fitted is provided in an outer peripheral surface of a base end portion of the first cylindrical part 61b (a portion of an outer peripheral surface facing a distal end portion of the second cylindrical part 62d). With this configuration, a space between the first cylindrical part 61b and the second cylindrical part 62d is sealed.

### [Remaining Configurations of Second Embodiment]

Except the components described above, the cut-off machine 10 according to the second embodiment has the same configuration as that of the cut-off machine 10 according to the first embodiment.

### [Effects Attained by Second Embodiment]

The cut-off machine 10 according to the second embodiment provides the same or similar effects as those provided by the cut-off machine 10 according to the first embodiment. For example, a length X1 of a receiving surface for the movable guard 50 (a length in the radial direction of a portion serving as the receiving surface for the movable guard 50) can be increased so as not to expand the portion serving as the receiving surface for the movable guard 50 (in particular, a portion which faces a cutting target when the blade 21 cuts the cutting target; in this example, a front portion of the first coupling member 61 and a front portion of the second coupling member 62) outward in the radial direction (or so as to reduce the outward expansion in the radial direction). This feature makes it possible to increase the length X1 of the receiving surface for the movable guard 50 while reducing a decrease in a maximum cutting depth of the blade.

### (Other Embodiments)

In the above description, the case where the surface of the first coupling member 61, which faces the movable base 51, is provide with the grease grooves 68 has been described as an example. However, a surface of the second coupling member 62, which faces the movable base 51, may be provided with the grease grooves 68. In other words, at least one of the surface of the first coupling member 61 that faces the movable base 51 or the surface of the second coupling member 62 that faces the movable base 51 may be provided with the grease grooves 68.

Note that the embodiments described above are merely preferred examples in nature, and are not intended to limit the scope, application, or uses of the present invention as defined in the claims.

As described above, the present disclosure is useful as a cut-off machine.

## Claims

1. A cut-off machine comprising:
a rotary shaft (20);
a blade (21) having a circular shape, and having, in a central portion thereof, an insertion hole (201) in which the rotary shaft (20) is inserted;
a holding mechanism (30) configured to hold the blade (21) with respect to the rotary shaft (20), and including a pair of holding members (31, 32) which each has an annular shape and which clamp the blade (21) therebetween;
a fixed guard (40) configured to cover a portion of an outer periphery of the blade (21), and including a fixed support (41) which is provided with a bearing portion (42) rotatably supporting the rotary shaft (20);
a movable guard (50) configured to movably cover a portion of the outer periphery of the blade (21), the portion being circumferentially adjacent to the portion covered with the fixed guard (40), the movable guard (50) having a movable base (51) formed to surround a periphery of the rotary shaft (20); and
a coupling mechanism (60) configured to couple the movable guard (50) to the fixed guard (40) such that the movable guard (50) can be turned around the rotary shaft (20), and including a first coupling member (61), a second coupling member (62),
**characterized in that** the coupling mechanism (60) further includes coupling bolt (63), the first coupling member (61) being disposed between the fixed support (41) and the movable base (51), the second coupling member (62) being disposed between the movable base (51) and the pair of holding members (31, 32), the first coupling member (61) and the second coupling member (62) slidably clamping the movable base (51) therebetween, the coupling bolt (63) fixing the first coupling member (61) to the fixed support (41), wherein
an inner peripheral edge of the movable base (51) is located closer to the rotary shaft (20) than the coupling bolt (63) is,
the movable base (51) is provided with a slot (501) having an arc shape extending in a circumferential direction of the rotary shaft (20),
the first coupling member (61) is provided with a first insertion hole (601) communicating with the slot (501),
the second coupling member (62) is provided with a second insertion hole (602) communicating with the slot (501), and
the coupling bolt (63) is sequentially inserted into the second insertion hole (602), the slot (501), and the first insertion hole (601), and is screwed into the fixed support (41).

2. The cut-off machine of claim 1, wherein
the second coupling member (62) has a protrusion (62b) protruding into the slot (501), and
the second insertion hole (602) is formed in the protrusion (62b).

3. The cut-off machine of claim 2, wherein
in the protrusion (62b), a portion located radially outside the second insertion hole (602) and a portion located radially inside the second insertion hole (602) are cut out.

4. The cut-off machine of any one of claims 1 to 3, further comprising:
a first sealing member (65) sealing a space between the first coupling member (61) and the movable base (51);
a second sealing member (66) sealing a space between the movable base (51) and the second coupling member (62); and
a third sealing member (67) sealing a space between the first coupling member (61) and the second coupling member (62).

5. The cut-off machine of claim 4, wherein
a grease groove (68) in which grease collects is provided in at least one of a surface of the first coupling member (61) or a surface of the second coupling member (62), the surfaces facing the movable base (51).

6. The cut-off machine of any one of claims 1 to 5, wherein
the movable guard (50) includes a first movable-guard part (55) and a second movable-guard part (56), the first movable-guard part (55) extending from the movable base (51) toward one circumferential end portion of the fixed guard (40) and configured to movably cover a portion of the outer periphery of the blade (21), the portion being adjacent to one circumferential end of the portion covered with the fixed guard (40), the second movable-guard part (56) extending from the movable base (51) toward an other circumferential end portion of the fixed guard (40) and configured to movably cover a portion of the outer periphery of the blade (21), the portion being adjacent to an other circumferential end of the portion covered with the fixed guard (40), and
when the movable base (51) is turned around the rotary shaft (20), one of the first movable-guard part (55) and the second movable-guard part (56) moves in a direction so as to enter in an inside of the fixed guard (40) and an other of the first movable-guard part (55) and the second movable-guard part (56) moves in a direction so as to come out of the fixed guard (40).

7. The cut-off machine of claim 6, wherein
the fixed guard (40) and the movable guard (50) are configured to constantly cover the outer periphery of the blade (21) in an angle range of 180° or more.

## Patentansprüche

1. Trennmaschine, umfassend:
eine Drehwelle (20);
eine Klinge (21), die eine runde Form aufweist und die in ihrem mittleren Abschnitt ein Einführloch (201) aufweist, in das die Drehwelle (20) eingeführt wird;
einen Haltemechanismus (30), der ausgestaltet ist, die Klinge (21) in Bezug auf die Drehwelle (20) zu halten, und umfassend ein Paar von Halteelementen (31, 32), die jeweils eine ringförmige Form aufweisen und die die Klinge (21) dazwischen einklemmen;
einen festsitzenden Schutz (40), der ausgestaltet ist, einen Abschnitt eines äußeren Umfangs der Klinge (21) zu bedecken, und umfassend eine festsitzende Stütze (41), die mit einem Lagerabschnitt (42) versehen ist, der die Drehwelle (20) drehbar stützt;
einen beweglichen Schutz (50), der ausgestaltet ist, einen Abschnitt eines äußeren Umfangs der Klinge (21) beweglich zu bedecken, wobei der Abschnitt umlaufend an den Abschnitt angrenzt, der mit dem festsitzenden Schutz (40) bedeckt wird, wobei der bewegliche Schutz (50) eine bewegliche Basis (51) aufweist, die so gebildet ist, dass sie einem Umfang der Drehwelle (20) umgibt; und
einen Kopplungsmechanismus (60), der ausgestaltet ist, den beweglichen Schutz (50) an den festsitzenden Schutz (40) zu koppeln, sodass der bewegliche Schutz (50) um die Drehwelle (20) gedreht werden kann, und umfassend ein erstes Kopplungselement (61), ein zweites Kopplungselement (62), **dadurch gekennzeichnet, dass** der Kopplungsmechanismus (60) weiter eine Kopplungsschraube (63) umfasst, wobei das erste Kopplungselement (61) zwischen der festsitzenden Stütze (41) und der beweglichen Basis (51) angeordnet ist, das zweite Kopplungselement (62) zwischen der beweglichen Basis (51) und dem Paar von Halteelementen (31, 32) angeordnet ist, das erste Kopplungselement (61) und das zweite Kopplungselement (62) die bewegliche Basis (51) gleitend dazwischen einklemmen, die Kopplungsschraube (63) das erste Kopplungselement (61) an der festsitzenden Stütze (41) fixiert, wobei
ein innerer Umfangsrand der beweglichen Basis (51) näher an der Drehwelle (20) liegt als die Kopplungsschraube (63),
die bewegliche Basis (51) mit einem Schlitz (501) versehen ist, der eine Bogenform aufweist und sich in einer Umfangsrichtung der Drehwelle (20) erstreckt,
das erste Kopplungselement (61) mit einem ersten Einführloch (601) in Kommunikation mit dem Schlitz (501) versehen ist,
das zweite Kopplungselement (62) mit einem zweiten Einführloch (602) in Kommunikation mit dem Schlitz (501) versehen ist und
die Kopplungsschraube (63) nacheinander in das zweite Einführloch (602), den Schlitz (501) und das erste Einführloch (601) eingeführt wird und in der festsitzenden Stütze (41) verschraubt wird.

2. Trennmaschine nach Anspruch 1, wobei
das zweite Kopplungselement (62) einen Vorsprung (62b) aufweist, der in den Schlitz (501) vorspringt, und
das zweite Einführloch (602) in dem Vorsprung (62b) gebildet ist.

3. Trennmaschine nach Anspruch 2, wobei
in dem Vorsprung (62b) ein Abschnitt, der radial außerhalb des zweiten Einführlochs (602) liegt, und ein Abschnitt, der radial innerhalb des zweiten Einführlochs (602) liegt, ausgeschnitten sind.

4. Trennmaschine nach einem der Ansprüche 1 bis 3, weiter umfassend:
ein erstes Dichtungselement (65), das einen Raum zwischen dem ersten Kopplungselement (61) und der beweglichen Basis (51) abdichtet;
ein zweites Dichtungselement (66), das einen Raum zwischen der beweglichen Basis (51) und dem zweiten Kopplungselement (62) abdichtet; und
ein drittes Dichtungselement (67), das einen Raum zwischen dem ersten Kopplungselement (61) und dem zweiten Kopplungselement (62) abdichtet.

5. Trennmaschine nach Anspruch 4, wobei
eine Schmierfettnut (68), in der sich Schmierfett ansammelt, in mindestens einer von einer Oberfläche des ersten Kopplungselements (61) oder einer Oberfläche des zweiten Kopplungselements (62) vorgesehen ist, wobei die Oberflächen der beweglichen Basis (51) zugewandt sind.

6. Trennmaschine nach einem der Ansprüche 1 bis 5, wobei
der bewegliche Schutz (50) einen ersten beweglichen Schutzteil (55) und einen zweiten beweglichen Schutzteil (56) umfasst, sich der erste bewegliche Schutzteil (55) von der beweglichen Basis (51) hin zu einem Umfangsendabschnitt des festsitzenden Schutzes (40) erstreckt und ausgestaltet ist, einen Abschnitt des Außenumfangs der Klinge (21) beweglich zu bedecken, der Abschnitt an ein Umfangsende des Abschnitts angrenzt, der mit dem festsitzenden Schutz (40) bedeckt ist, sich der zweite bewegliche Schutzteil (56) von der beweglichen Basis (51) hin zu einem anderen Umfangsendabschnitt des festsitzenden Schutzes (40) erstreckt und ausgestaltet ist, einen Abschnitt des Außenumfangs der Klinge (21) beweglich zu bedecken, der Abschnitt an ein anderes Umfangsende des Abschnitts angrenzt, der mit dem festsitzenden Schutz (40) bedeckt ist, und
wenn die bewegliche Basis (51) um die Drehwelle (20) gedreht wird, sich einer des ersten beweglichen Schutzteils (55) und des zweiten beweglichen Schutzteils (56) in eine Richtung bewegt, sodass er in ein Inneres des festsitzenden Schutzes (40) hineingeht, und sich ein anderer des ersten beweglichen Schutzteils (55) und des zweiten beweglichen Schutzteils (56) in eine Richtung bewegt, sodass er aus dem festsitzenden Schutz (40) herauskommt.

7. Trennmaschine nach Anspruch 6, wobei
der festsitzende Schutz (40) und der bewegliche Schutz (50) ausgestaltet sind, den äußeren Umfang der Klinge (21) in einem Winkelbereich von 180° oder mehr konstant zu bedecken.

## Revendications

1. Machine à tronçonner comprenant :
un arbre rotatif (20) ;
une lame (21) ayant une forme circulaire, et ayant, dans une partie centrale de celle-ci, un trou d'insertion (201) dans lequel l'arbre rotatif (20) est inséré ;
un mécanisme de maintien (30) configuré pour maintenir la lame (21) par rapport à l'arbre rotatif (20), et comportant une paire d'éléments de maintien (31, 32) qui ont chacun une forme annulaire et qui serrent la lame (21) entre eux ;
une protection fixe (40) configurée pour recouvrir une partie d'une périphérie externe de la lame (21), et comportant un support fixe (41) qui est muni d'une partie de palier (42) supportant en rotation l'arbre rotatif (20) ;
une protection mobile (50) configurée pour recouvrir de manière mobile une partie de la périphérie externe de la lame (21), la partie étant circonférentiellement adjacente à la partie recouverte par la protection fixe (40), la protection mobile (50) ayant une base mobile (51) formée pour entourer une périphérie de l'arbre rotatif (20) ; et
un mécanisme d'accouplement (60) configuré pour coupler la protection mobile (50) à la protection fixe (40) de sorte que la protection mobile (50) puisse être mise en rotation autour de l'arbre rotatif (20), et comportant un premier élément d'accouplement (61), un deuxième élément d'accouplement (62),
**caractérisée en ce que** le mécanisme d'accouplement (60) comporte en outre un boulon d'accouplement (63), le premier élément d'accouplement (61) étant disposé entre le support fixe (41) et la base mobile (51), le deuxième élément d'accouplement (62) étant disposé entre la base mobile (51) et la paire d'éléments de maintien (31, 32), le premier élément d'accouplement (61) et le deuxième élément d'accouplement (62) serrant de manière coulissante la base mobile (51) entre eux, le boulon d'accouplement (63) fixant le premier élément d'accouplement (61) au support fixe (41), où
un bord périphérique interne de la base mobile (51) est situé plus près de l'arbre rotatif (20) que ne l'est le boulon d'accouplement (63),
la base mobile (51) est munie d'une fente (501) ayant une forme d'arc s'étendant dans un direction circonférentielle de l'arbre rotatif (20),
le premier élément d'accouplement (61) est muni d'un premier trou d'insertion (601) communiquant avec la fente (501),
le deuxième élément d'accouplement (62) est muni d'un deuxième trou d'insertion (602) communiquant avec la fente (501), et
le boulon d'accouplement (63) est inséré séquentiellement dans le deuxième trou d'insertion (602), la fente (501) et le premier trou d'insertion (601), et est vissé dans le support fixe (41).

2. Machine à tronçonner de la revendication 1, dans laquelle
le deuxième élément d'accouplement (62) a une saillie (62b) faisant saillie dans la fente (501), et
le deuxième trou d'insertion (602) est formé dans la saillie (62b).

3. Machine à tronçonner de la revendication 2, dans laquelle
dans la saillie (62b), une partie située radialement à l'extérieur du deuxième trou d'insertion (602) et une partie située radialement à l'intérieur du deuxième trou d'insertion (602) sont découpées.

4. Machine à tronçonner de l'une quelconque des revendications 1 à 3, comprenant en outre :
un premier élément d'étanchéité (65) assurant l'étanchéité d'un espace entre le premier élément d'accouplement (61) et la base mobile (51) ;
un deuxième élément d'étanchéité (66) assurant l'étanchéité d'un espace entre la base mobile (51) et le deuxième élément d'accouplement (62) ; et
un troisième élément d'étanchéité (67) assurant l'étanchéité d'un espace entre le premier élément d'accouplement (61) et le deuxième élément d'accouplement (62).

5. Machine à tronçonner de la revendication 4, dans laquelle
une rainure de graisse (68) dans laquelle la graisse s'accumule est prévue dans au moins l'une d'une surface du premier élément d'accouplement (61) et d'une surface du deuxième élément d'accouplement (62), les surfaces faisant face à la base mobile (51).

6. Machine à tronçonner de l'une quelconque des revendications 1 à 5, dans laquelle
la protection mobile (50) comporte une première partie de protection mobile (55) et une deuxième partie de protection mobile (56), la première partie de protection mobile (55) s'étendant de la base mobile (51) vers une partie d'extrémité circonférentielle de la protection fixe (40) et configurée pour recouvrir de manière mobile une partie de la périphérie externe de la lame (21), la partie étant adjacente à une extrémité circonférentielle de la partie recouverte par la protection fixe (40), la deuxième partie de protection mobile (56) s'étendant de la base mobile (51) vers une autre partie d'extrémité circonférentielle de la protection fixe (40) et configurée pour recouvrir de manière mobile une partie de la périphérie externe de la lame (21), la partie étant adjacente à une autre extrémité circonférentielle de la partie recouverte par la protection fixe (40), et
lorsque la base mobile (51) est mise en rotation autour de l'arbre rotatif (20), l'une de la première partie de protection mobile (55) et de la deuxième partie de protection mobile (56) se déplace dans une direction de manière à entrer dans un intérieur de la protection fixe (40) et une autre de la première partie de protection mobile (55) et de la deuxième partie de protection mobile (56) se déplace dans une direction de manière à sortir de la protection fixe (40).

7. Machine à tronçonner de la revendication 6, dans laquelle
la protection fixe (40) et la protection mobile (50) sont configurées pour recouvrir en permanence la périphérie externe de la lame (21) dans une plage d'angle de 180° ou plus.
